# EUROPÄISCHE PATENTSCHRIFT

(11) **EP 2 670 630 B1**
(45) Veröffentlichungstag und Bekanntmachung des Hinweises auf die Patenterteilung: **09.12.2015**
(21) Anmeldenummer: 12708728.6
(22) Anmeldetag: 26.01.2012
(51) Int. Cl.: B60R 16/03, H02J 7/14, H02J 7/34

(54) **VORRICHTUNG UND VERFAHREN ZUM STABILISIEREN EINER AN EINEM IN EINEM BORDNETZ EINES FAHRZEUGS ANGEORDNETEN ERSTEN ELEKTRISCHEN VERBRAUCHER ANLIEGENDEN SPANNUNG**
DEVICE AND METHOD FOR STABILISING VOLTAGE APPLIED TO A FIRST ELECTRIC CONSUMER ARRANGED IN A VEHICLE ELECTRICAL SYSTEM
DISPOSITIF ET PROCÉDÉ PERMETTANT DE STABILISER UNE TENSION APPLIQUÉE À UN PREMIER CONSOMMATEUR ÉLECTRIQUE SITUÉ SUR UN RÉSEAU DE BORD D'UN VÉHICULE

(30) Priorität: 03.02.2011 DE 102011003605
(43) Veröffentlichungstag der Anmeldung: 11.12.2013
(73) Patentinhaber: Bayerische Motoren Werke Aktiengesellschaft, 80809 München (DE)
(72) Erfinder: PRÖBSTLE, Hartmut, 97082 Augsburg (DE); NEUDECKER, Rupert, 80796 Muenchen (DE); MAHMOUD, Sherif, 80807 Muenchen (DE)
(86) Internationale Anmeldenummer: PCT/EP2012/051199
(87) Internationale Veröffentlichungsnummer: WO 2012/104192

(56) Entgegenhaltungen:
- WO-A1-2009/074604
- DE-A1-102004 023 620
- DE-A1-102005 042 154
- DE-A1-102009 024 374
- ROBERT BOSCH ED - BOSCH R: "Autoelektrik Autoelektronik; Künftige Bordnetze", 1. Oktober 2002 (2002-10-01), AUTOELEKTRIK AUTOELEKTRONIK, STUTTGART : ROBERT BOSCH GMBH, DE, XP002655208, ISBN: 978-3-528-13872-1 Seiten 16-19, Abbildung 9

## Beschreibung

Die Erfindung betrifft ein Bordnetz für ein Fahrzeug und ein Verfahren zum Stabilisieren einer an einem in einem Bordnetz eines Fahrzeugs angeordneten ersten, spannungssensitiven elektrischen Verbraucher anliegenden Spannung, wobei das Bordnetz neben zumindest einem ersten, spannungssensitiven elektrischen Verbraucher ferner zumindest einen zweiten, nicht-spannungssensitiven elektrischen Verbraucher aufweist und eine erste Spannungsversorgungseinheit, die eine Versorgungsspannung bereitstellt, wobei des weiteren vorgesehen sind, eine Speichereinheit, die dazu ausgebildet ist, zumindest zeitweise elektrische Energie zu speichern, eine zweite Spannungsversorgungseinheit zum Bereitstellen einer Ladespannung, eine Schalteinheit, an die zumindest der erste, spannungssensitive elektrische Verbraucher, die Speichereinheit, die erste Spannungsversorgungseinheit und die zweite Spannungsversorgungseinheit angeschlossen sind, und eine Steuereinheit.

Fahrzeuge sind heutzutage in hohem Maße mit elektrischen Komponenten ausgestattet. Dies fängt bei einfachen Geräten, wie beispielsweise Lüftern, Sitzheizungen oder Heckscheibenheizungen an, und endet bei hochkomplexen Regelungssystemen, mit denen eine die Fahrdynamik des Fahrzeuges repräsentierende Größe geregelt bzw. beeinflusst werden kann. Als Beispiele für solche Regelungssysteme seien bereits heute eingesetzte Systeme zur Beeinflussung des Fahrwerks eines Fahrzeugs oder Systeme zur Regelung der Gierrate eines Fahrzeugs genannt. Es seien aber auch zukünftig einsetzbare Systeme wie brake-by-wire- oder steer-by-wire-Systeme erwähnt.

Zum Aktivieren bzw. Aktivhalten müssen diese elektrischen Komponenten mit einer elektrischen Spannung und somit mit elektrischer Energie versorgt werden. Dabei ist es wichtig, dass die hierfür bereitgestellte Bordnetzspannung zeitlich stabil ist bzw. stabil gehalten wird, vor allem mit Blick auf elektrische Komponenten, die als spannungssensitiv einzustufen sind. Spannungssensitiv ist eine Komponente dann, wenn eine im Fahrbetrieb des Fahrzeuges auftretende und durch eine Instabilität der Bordnetzspannung bedingte Funktionsstörung oder Funktionsbeeinträchtigung dieser Komponente dazu führt, dass der Fahrbetrieb nicht mehr uneingeschränkt aufrechterhalten werden kann oder aber ein Gefahrenpotential für den weiteren Fahrbetrieb darstellt. Wohingegen mit Blick auf elektrische Komponenten, die als nicht-spannungssensitiv einzustufen sind, Instabilitäten in der Bordnetzspannung weniger bis gar nicht problemtisch sind.

Nun gibt es aber gerade im Fahrbetrieb eines Fahrzeugs Vorgänge, bei denen es zu Schwankungen in der Bordnetzspannung kommen kann, beispielsweise bedingt durch Spannungsabfälle an Lasten oder parasitären Widerständen oder bedingt durch einen sehr hohen Strombedarf eines elektrischen Verbrauchers. Insbesondere bei Fahrzeugen, die mit einer sogenannten Start-Stopp-Automatik ausgestattet sind, kann es beim Wiederstarten des Verbrennungsmotors zu Instabilitäten in der Bordnetzspannung kommen. Dabei ist es unerheblich, ob es sich um ein konventionelles Fahrzeug handelt, das ausschließlich durch einen Verbrennungsmotor angetrieben wird, oder um ein Hybridfahrzeug handelt, bei dem für den Vortrieb sowohl ein Verbrennungsmotor als auch eine elektrische Maschine vorgesehen sind. Bei Hybridfahrzeugen, insbesondere bei als Parallelhybrid ausgeführten Fahrzeugen sind generell Maßnahmen zum Stabilisieren der Bordnetzspannung zu ergreifen. Vor allem beim Zustarten des Elektromotors kann es zu Instabilitäten in der Bordnetzspannung kommen. Hierbei befindet sich das Hybridfahrzeug in einem Betriebszustand, in welchem es allein durch die elektrische Maschine angetrieben wird und der Verbrennungsmotor gestartet wird, um anstelle der elektrischen Maschine das für den Vortrieb erforderliche Drehmoment zu erzeugen. Demzufolge ist gerade mit Blick auf startspannungssensitive elektrische Komponenten eine Bordnetzspannung mit zeitlich stabilem Verhalten besonders wichtig. Startspannungssensitive Komponenten sind solche Komponenten, die auf die nicht unerheblichen Bordnetzspannungsschwankungen, die beim Wiederstarten oder Zustarten eines Verbrennungsmotors auftreten können, mit Funktionsbeeinträchtigungen oder Funktionsstörungen reagieren. Zudem kann es sich um solche Komponenten handeln, die während oder unmittelbar im Anschluss an einen Wiederstart-oder Zustartvorgang für den Fahrbetrieb des Fahrzeuges relevant sind.

Es sind verschieden Maßnahmen bekannt, die zum Stabilisieren der Bordnetzspannung oder zum Bereitstellen einer stabilen Bordnetzspannung ergriffen werden. So können sogenannte Hochvolt- oder Niedervoltstartsysteme zum Einsatz kommen, die es ermöglichen, einen Verbrennungsmotor wiederzustarten oder zuzustarten, ohne dass es dabei zu Instabilitäten in der Bordnetzspannung kommt. Niedervoltstartsysteme können sowohl bei konventionellen Fahrzeugen als auch bei Hybridfahrzeugen zum Einsatz kommen. Ein mit einem Niedervoltstartsystem ausgestattetes Fahrzeug weist zusätzlich zu dem herkömmlichen Basisbordnetz ein zusätzliches Startbordnetz auf, welches über ein Koppelelement, beispielsweise einen Spannungswandler oder einen Schalter, mit dem Basisbordnetz gekoppelt ist. Das Startbordnetz, das über eine eigene Batterie verfügt, stellt die für das Wiederstarten oder Zustarten des Verbrennungsmotors erforderliche elektrische Energie bereit, während die übrigen im Fahrzeug verbauten elektrischen Komponenten über das Basisbordnetz versorgt werden. Nachteilig an dieser Realisierung ist, dass ein zusätzliches Bordnetz, nämlich das Startbordnetz benötigt wird. Dies ist zum einen mit hohen Kosten verbunden, die von den Komponenten des Startbordnetzes selbst und von den für die Koppelung der beiden Netzte benötigten Komponenten herrühren. Zum anderen ist die Unterbringung der zusätzlichen Komponenten des Startbordnetzes nicht unproblematisch, da in einem Fahrzeug nur ein begrenzter Bauraum zur Verfügung steht. Hochvoltstartsysteme kommen bei als Parallelhybrid aufgebauten Hybridfahrzeugen zum Einsatz. Bei einem solchen Fahrzeug sind der Verbrennungsmotor und die elektrische Maschine in der Regel über eine Kupplungseinheit untereinander und mit dem Getriebe verbunden. Somit ist es einerseits möglich, dass das Fahrzeug allein durch den Verbrennungsmotor oder allein durch die elektrische Maschine oder kombiniert durch beide angetrieben werden kann. Andererseits ist es möglich, ein Wiederstarten oder Zustarten des Verbrennungsmotors unter Einsatz der elektrischen Maschine zu realisieren. Nachteilig an dieser Realisierung ist, dass die für den Fahrbetrieb vorgesehene elektrische Maschine und auch der elektrische Speicher, über den die elektrische Maschine mit elektrischer Energie versorgt wird, größer dimensioniert werden muss als dies eigentlich erforderlich wäre, da sie zusätzlich zu dem den Fahrzeugvortrieb bewirkenden Drehmoment auch ein das Wiederstarten oder Zustarten des Verbrennungsmotors bewirkendes Drehmoment bereitstellen muss. Dies führt zu höheren Kosten.

In der DE 10 2009 024 374 A1 ist ein Bordnetz für ein Kraftfahrzeug und ein Verfahren zum Betreiben eines elektrischen Verbrauchers beschrieben, bei dem bzw. mit dem eine Überspannung oder Unterspannung kompensiert werden kann, die sich für die an einem elektrischen Verbraucher anliegende Bordnetzspannung einstellt. Das Bordnetz weist auf: einen ersten, spannungssensitiven elektrischen Verbraucher, einen zweiten, nicht-spannungssensitiven elektrischen Verbraucher, eine erste Spannungsversorgungseinheit, die eine Versorgungsspannung bereitstellt, wobei des weiteren vorgesehen sind, eine Speichereinheit, die dazu ausgebildet ist, zumindest zeitweise elektrische Energie zu speichern, eine zweite Spannungsversorgungseinheit zum Bereitstellen einer Ladespannung, eine Schalteinheit, an die zumindest der erste, spannungssensitive elektrische Verbraucher, die Speichereinheit, die erste Spannungsversorgungseinheit und die zweite Spannungsversorgungseinheit angeschlossen sind, und eine Steuereinheit. Zum Kompensieren der Überspannung oder Unterspannung kann ein als Doppelschichtkondensator ausgebildeter Energiespeicher zwischen einem Primärpol und einem Sekundärpol des Bordnetzes, an dem der elektrische Verbraucher angeschlossen ist, mittels eines aus vier Schaltern aufgebauten Schaltmittels in zwei unterschiedlichen Polungen eingefügt werden. Mit einer ersten Polung wird die Überspannung kompensiert. Mit einer zweiten, gegenüber der ersten Polung invertierten Polung wird die Unterspannung kompensiert. Um die elektrische Energie bereitstellen zu können, die insbesondere für das Kompensieren der Unterspannung benötigt wird, ist es bei Bedarf erforderlich, den Doppelschichtkondensator aufzuladen. Das Aufladen des Doppelschichtkondensators erfolgt entweder während des Kompensierens einer Überspannung oder während eines Rekuperationbetriebs. Gerade was das Aufladen des Doppelschichtkondensators angeht, besthet hier noch Optimierungsbedarf.

Es ist daher eine Aufgabe der vorliegenden Erfindung, eine Vorrichtung und ein Verfahren der eingangs genannten Art weiterzubilden, um jederzeit das Stabilisieren einer an einem in einem Bordnetz eines Fahrzeugs angeordneten ersten, spannungssensitiven elektrischen Verbraucher anliegenden Spannung realisieren zu können, und ohne dafür zusätzliche oder größer dimensionierte Komponenten einsetzen oder einen größeren Bauraum zur Verfügung stellen zu müssen. Es soll eine kostengünstige und einfach handzuhabende Vorrichtung bzw. ein entsprechendes Verfahren bereitgestellt werden.

Diese Aufgabe wird durch ein Bordnetz der eingangs genannten Art gelöst, bei der die Steuereinheit, dazu ausgebildet ist, zum Stabilisieren einer an dem ersten spannungssensitiven elektrischen Verbraucher anliegenden Spannung, festzustellen, ob ein Stabilisieren der an dem ersten, spannungssensitiven elektrischen Verbraucher anliegenden Spannung vorzunehmen ist, wobei die Steuereinheit ferner dazu ausgebildet ist, solange ein Stabilisieren nicht vorzunehmen ist, die Schalteinheit derart anzusteuern, dass der erste, spannungssensitive elektrische Verbraucher an die erste Spannungsversorgungseinheit angeschlossen ist, und sobald ein Stabilisieren vorzunehmen ist, die Schalteinheit derart anzusteuern, dass der erste, spannungssensitive elektrische Verbraucher an eine aus der Speichereinheit und der ersten Spannungsversorgungseinheit gebildeten Reihenschaltung angeschlossen ist, um dadurch den ersten, spannungssensitiven elektrischen Verbraucher durch eine von der Reihenschaltung bereitgestellte Spannung zum Ausgleichen einer vorhandenen Verringerung der Versorgungsspannung zu versorgen, wobei die Steuereinheit ferner dazu ausgebildet ist, anschließend an ein vorgenommenes Stabilisieren die zweite Spannungsversorgungseinheit, den zweiten, nicht-spannungssensitiven elektrischen Verbraucher und die Schalteinheit jeweils zumindest zeitweise derart anzusteuern, dass die zweite Spannungsversorgungseinheit eine Ladespannung bereitstellt, deren Wert größer ist, als die von der ersten Spannungsversorgungseinheit bereitgestellte Versorgungsspannung, dass durch den zweiten, nicht-spannungssensitiven elektrischen Verbraucher zumindest zeitweise ein elektrischer Strom fließt, und dass ein Laden der Speichereinheit über einen von der zweiten Spannungsversorgungseinheit und dem zweiten , nicht-spannungssensitiven elektrischen Verbraucher ausgebildeten Strompfad möglich ist.

Die Aufgabe wird ferner durch ein Verfahren der eingangs genannten Art gelöst, bei dem folgende Schritte in der Steuereinheit ausgeführt werden:
- Feststellen, ob ein Stabilisieren der an dem ersten, spannungssensitiven elektrischen Verbraucher anliegenden Spannung vorzunehmen ist,
- Ansteuern der Schalteinheit solange ein Stabilisieren nicht vorzunehmen ist derart, dass der erste, spannungssensitive elektrische Verbraucher an die erste Spannungsversorgungseinheit angeschlossen ist,
- Ansteuern der Schalteinheit sobald ein Stabilisieren vorzunehmen ist derart, dass der erste, spannungssensitive elektrische Verbraucher an eine aus der Speichereinheit und der ersten Spannungsversorgungseinheit gebildeten Reihenschaltung angeschlossen ist, um dadurch den ersten, spannungssensitiven elektrischen Verbraucher durch eine von der Reihenschaltung bereitgestellte Spannung zum Ausgleichen einer vorhandenen Verringerung der Versorgungsspannung zu versorgen, und
- Ansteuern der zweiten Spannungsversorgungseinheit, des zweiten, nicht-spannungssensitiven elektrischen Verbrauchers und der Schalteinheit anschließend an ein vorgenommenes Stabilisieren jeweils zumindest zeitweise derart, dass die zweite Spannungsversorgungseinheit eine Ladespannung bereitstellt, deren Wert größer ist, als die von der ersten Spannungsversorgungseinheit bereitgestellte Versorgungsspannung, dass durch den zweiten, nichtspannungssensitiven elektrischen Verbraucher zumindest zeitweise ein elektrischer Strom fließt, und dass ein Laden der Speichereinheit über einen von der zweiten Spannungsversorgungseinheit und dem zweiten, nicht-spannungssensitiven elektrischen Verbraucher ausgebildeten Strompfad möglich ist.

Dem erfindungsgemäßen Bordnetz und dem erfindungsgemäßen Verfahren liegt folgende Idee zugrunde: Zum einen wird eine Speichereinheit vorgesehen, die diejenige Energie bereitstellt, die für das Stabilisieren der an dem ersten elektrischen Verbraucher anliegenden Spannung benötigt wird. Zum anderen wird bei den elektrischen Verbrauchern zwischen ersten und zweiten Verbrauchern unterschieden. Bei den ersten Verbrauchern handelt es sich um solche Verbraucher, die spannungssensitiv sind und somit mit einer stabilisierten Versorgungsspannung versorgt werden sollten. Bei den zweiten Verbrauchern handelt es sich um nicht-spannungssensitive Verbraucher, die auch mit einer nicht stabilisierten Versorgungsspannung betrieben werden können. Das für den Betrieb der ersten, spannungssensitive Verbraucher erforderliche Stabilisieren der Versorgungsspannung wird dadurch erreicht, dass im Bedarfsfall eine zusätzliche Speichereinheit zu der eigentlichen Spannungsversorgungseinheit in Reihe geschaltet wird, so dass der erste, spannungssensitive elektrische Verbraucher durch eine von der Reihenschaltung bereitgestellte Spannung zum Ausgleichen einer vorhandenen Verringerung der Versorgungsspannung versorgt werden kann. Somit kann bei einem Betriebszustand des Fahrzeugs, bei dem ein erhöhter Energiebedarf zum Betreiben eines oder mehrerer im Fahrzeug verbauter elektrischer Verbraucher erforderlich ist und der eigentlich zu einer instabilen Versorgungsspannung führen würde, die in der Speichereinheit gespeicherte elektrische Energie zum Stabilisieren der Versorgungsspannung verwendet werden. Das nach erfolgtem Stabilisieren erforderliche Aufladen der Speichereinheit wird mittels einer zweiten Spannungsversorgungseinheit und dem zweiten, nicht-spannungssensitiven elektrischen Verbraucher realisiert, die beide sowieso im Fahrzeug verbaut sind. Somit kann auf zusätzliche oder größer dimensionierte Komponenten oder gar auf eine eigens für das Laden der Speichereinheit vorgesehene Ladeschaltung, bei der es sich ebenfalls um eine größere Komponente handelt, verzichtet werden, weswegen auch kein größerer Bauraum zur Verfügung gestellt werden muss. Insgesamt wird eine kostengünstige und einfach handzuhabende Vorrichtung bzw. ein entsprechendes Verfahren bereitgestellt.

Die obengenannte Aufgabe ist daher vollständig gelöst.

An dieser Stelle sei angemerkt, dass es sich in den nachfolgenden Ausführungen bei dem ersten elektrischen Verbraucher um einen spannungssensitiven elektrischen Verbraucher und bei dem zweiten elektrischen Verbraucher um einen nicht-spannungssensitiven elektrischen Verbraucher handelt.

Was das Ansteuern der zweiten Spannungsversorgungseinheit, des zweiten, nicht-spannungssensitiven elektrischen Verbrauchers und der Schalteinheit angeht, das anschließend an das Stabilisieren der an dem ersten, spannungssensitiven Verbraucher anliegenden Spannung erfolgt, so sei auf Folgendes hingewiesen: es ist nicht zwingend erforderlich, dass die zweite Spannungsversorgungseinheit und der zweite, nicht-spannungssensitive elektrische Verbraucher so angesteuert werden, dass für eine bestimmte Zeitdauer die zweite Spannungsversorgungseinheit die erhöhte Ladespannung bereitstellt und dabei gleichzeitig der zweite, nicht-spannungssensitive elektrische Verbraucher hinsichtlich Stromfluss durchgängig aktiviert ist. Theoretisch reicht es aus, allein die zweite Spannungsversorgungseinheit zum Bereitstellen der erhöhten Ladespannung anzusteuern, ohne gleichzeitig den zweiten, nicht-spannungssensitiven elektrischen Verbraucher zu aktivieren. Da sich jedoch an der Speichereinheit ein größerer Spannungsabfall einstellt, wenn der zweite, nicht-spannungssensitive elektrische Verbraucher derart aktiviert ist, dass durch diesen ein Strom fließt, wird der zweite, nicht-spannungssensitive elektrische Verbraucher zumindest zeitweise während der Zeitdauer aktiviert, in der die zweite Spannungsversorgungseinheit die erhöhte Ladespannung bereitstellt.

Konsequenterweise wird die Erfindung bei einem Fahrzeug eingesetzt, das einen Verbrennungsmotor und eine erste elektrische Maschine aufweist, wobei die erste elektrische Maschine dazu ausgebildet ist, den Verbrennungsmotor zumindest zeitweise anzutreiben, und wobei die Steuereinheit ferner dazu ausgebildet ist, zum Feststellen, ob ein Stabilisieren der an dem ersten, spannungssensitiven elektrischen Verbraucher anliegenden Spannung vorzunehmen ist, auszuwerten, ob ein Wiederstarten und/oder Zustarten des Verbrennungsmotors durch die erste elektrische Maschine durchzuführen ist. Gerade für das Wiederstarten eines Verbrennungsmotors (Fahrzeug mit Start-Stopp-Automatik) oder für das Zustarten eines Verbrennungsmotors (Hybridfahrzeug) wird eine große Menge an elektrischer Energie benötigt. Wird diese Energiemenge aus der Spannungsversorgungseinheit entnommen, die die Versorgungsspannung des Bordnetzes bereitstellt, so führt dies zu einer deutlichen Verringerung der Versorgungsspannung. Diese Instabilität würde bei dem ersten Verbraucher (spannungssensitiver Verbraucher) zu Funktionsbeeinträchtigungen oder Funktionsstörungen führen. Folglich wird während des Wiederstarts oder Zustarts des Verbrennungsmotors der erste, spannungssensitive Verbraucher an eine aus der ersten Spannungsversorgungseinheit und der Speichereinheit gebildeten Reihenschaltung angeschlossen und von dieser mit Spannung bzw. elektrischer Energie versorgt.

Wie bereits ausgeführt, handelt es sich bei dem ersten Verbraucher um einen spannungssensitiven, insbesondere um einen startspannungssensitiven Verbraucher. Dies kann beispielsweise ein für den Fahrbetrieb relevanter Verbraucher sein. Würde bei solch einem Verbraucher eine Funktionsstörung oder Funktionsbeeinträchtigung auftreten, könnte dies dazu führen, dass der Fahrbetrieb nicht mehr uneingeschränkt aufrechterhalten werden kann oder dies ein Gefahrenpotential für den weiteren Fahrbetrieb darstellt. Bei solch einem Verbraucher kann es sich beispielsweise um ein System zur Regelung der Gierrate des Fahrzeugs oder um ein Fahrwerkregelungssystem oder um ein steer-by-wire-System oder um ein brake-by-wire-System handeln. Bei dem zweiten Verbraucher handelt es sich um einen nichtspannungssensitiven, insbesondere um einen nicht-startspannungssensitiven Verbraucher. Dies kann beispielsweise ein für den Fahrbetrieb des Fahrzeugs nicht relevanter Verbraucher sein. Würde es bei solch einem Verbraucher zu einer Funktionsstörung oder Funktionsbeeinträchtigung kommen, wäre trotzdem ein uneingeschränkter Fahrbetrieb des Fahrzeugs möglich. Beispielsweise kann es sich um eine Heckscheibenheizung oder um eine Sitzheizung oder um einen Lüfter oder um ein Gebläse handeln.

In einer weiteren Ausgestaltung der Erfindung wird auf ein durchzuführendes Wiederstarten des Verbrennungsmotors erkannt, wenn in einem Fahrzeugruhezustand ein Anfahrsignal vorliegt, wobei in dem Fahrzeugruhezustand das Fahrzeug steht und der Verbrennungsmotor steht oder eine Motordrehzahl aufweist, die zwischen einer Abstelldrehzahl und dem Wert Null liegt, und/oder wird auf ein Zustarten des Verbrennungsmotors erkannt, wenn in einem Fahrzeugbewegungszustand eine Motormomentanforderung vorliegt, wobei in dem Fahrzeugbewegungszustand das Fahrzeug fährt und der Verbrennungsmotor steht oder eine Motordrehzahl aufweist, die zwischen einer Abstelldrehzahl und dem Wert Null liegt.

Sowohl beim Wiederstarten als auch beim Zustarten steht ein wirktechnisches Verbinden des Verbrennungsmotors mit den angetriebenen Rädern des Fahrzeugs unmittelbar bevor. Sowohl bei dem Fahrzeugruhezustand als auch bei dem Fahrzeugbewegungszustand wird darauf abgestellt, dass der Verbrennungsmotor entweder still steht (Motordrehzahl Null), oder eine abklingende Motordrehbewegung ausführt (Motordrehzahl zwischen Abstelldrehzahl und dem Wert Null). Bei dem Fahrzeugruhezustand soll die Fahrzeuggeschwindigkeit den Wert Null aufweisen, wohingegen bei dem Fahrzeugbewegungszustand die Fahrzeuggeschwindigkeit einen von Null verschiedenen Wert aufweist. Das Anfahrsignal repräsentiert ein unmittelbar bevorstehendes Anfahren des Fahrzeugs, welches aus dem Fahrzeugruhezustand heraus begonnen werden soll. Bevorzugt soll es sich dabei um ein durch den Fahrer des Fahrzeugs eingeleitetes Anfahren handeln. Als Anfahrsignal kommt hierbei beispielsweise ein Signal in Frage, welches die Betätigung des Kupplungspedals durch den Fahrer repräsentiert. Alternativ kann es sich aber auch um ein automatisiertes, also fahrerunabhängig eingeleitetes Anfahren handeln. Die Motormomentanforderung repräsentiert ein Drehmoment, welches von dem Verbrennungsmotor im vorliegenden Fahrzeugbewegungszustand fahrerabhängig oder fahrerunabhängig einzustellen ist. Ein fahrerabhängig einzustellendes Drehmoment ergibt sich beispielsweise aufgrund einer Betätigung des Fahrpedals durch den Fahrer. Folglich kann es sich in diesem Fall bei der Motormomentanforderung um eine die Fahrpedalbetätigung repräsentierende Größe handeln. Beispielsweise kann ein Längsregelungssystem eine fahrerunabhängige Motormomentanforderung erzeugen, wobei es sich bei dem Längsregelungssystem beispielsweise um einen Abstandsregeltempomaten handeln kann. Bei der Abstelldrehzahl handelt es sich um diejenige Motordrehzahl des Verbrennungsmotors, die sich beim Ablegen des Verbrennungsmotors einstellt, d.h. bei oder unmittelbar nach Unterbrechen der Wirkverbindung zu den angetriebenen Rädern, beispielsweise bedingt durch Betätigen der Kupplung. Die Abstelldrehzahl kann im ersten Moment der Leerlaufdrehzahl entsprechen, sie kann aber betriebsbedingt auch zeitweise durchaus oberhalb der Leerlaufdrehzahl liegen.

Das Wiederstarten und Zustarten des Verbrennungsmotors unterscheidet sich von einem Initialstarten des Verbrennungsmotors, welches erstmals nach Betreten des Fahrzeugs vom Fahrer bei Fahrtantritt ausgelöst wird. Beim Initialstarten ist es nicht erforderlich, dass der Verbrennungsmotor innerhalb kürzester Zeit ein definiertes großes Drehmoment bereitstellt. Wohingegen beim Wiederstarten, beispielsweise an einer Ampel, innerhalb kürzester Zeit ein großes Drehmoment durch den Verbrennungsmotor bereitzustellen ist. Entsprechendes gilt beim Zustarten des Verbrennungsmotors in einem Fahrzeugbewegungszustand. In diesem Fall muss der Verbrennungsmotor innerhalb kürzester Zeit ein mit dem Fahrzeugbewegungszustand korrelierendes Drehmoment bereitstellen.

In einer weiteren Ausgestaltung der Erfindung weist die Schalteinheit ein erstes Schaltelement und ein zweites Schaltelement auf. Vorzugsweise sind die beiden Schaltelemente als Parallelschaltung angeordnet, so dass die Schalteinheit vorteilhafterweise zwei unterschiedliche Schaltzustände einnehmen kann. Einen ersten Schaltzustand, der bei einem durchzuführenden Wiederstarten und/oder Zustarten des Verbrennungsmotors eingenommen wird und bei dem der erste, spannungssensitive elektrische Verbraucher an die aus der Speichereinheit und der ersten Spannungsversorgungseinheit gebildete Reihenschaltung angeschlossen ist. Und einen zweiten Schaltzustand, der ansonsten eingenommen wird, und bei dem der erste, spannungssensitive elektrische Verbraucher allein an die erste Spannungsversorgungseinheit angeschlossen ist. Vorteilhafterweise wird nach erfolgtem Wiederstarten und/oder Zustarten die Schalteinheit derart angesteuert, dass diese den ersten Schaltzustand beibehält. Vorzugsweise sind die beiden Schaltelemente als MOSFET-Transistoren ausgeführt.

In einer weiteren Ausgestaltung der Erfindung ist die Speichereinheit als Kondensator, insbesondere als Superkondensator ausgebildet. Gegenüber Akkumulatoren zeichnen sich Kondensatoren dadurch aus, dass sie mit einem einfacheren Ladeverfahren und deutlich schneller geladen werden können, wodurch sich die Verfügbarkeit des versorgten Geräts oder Systems erhöht. Ferner weisen sie eine höhere Lebensdauer auf und verfügen zudem über eine höhere Leistungsdichte. Superkondensatoren sind als Doppelschicht-Kondensatoren ausgebildet. Hierbei handelt es sich um die Kondensatoren mit der größten Energiedichte. Die hohe Kapazität von Superkondensatoren beruht darauf, dass Ionen in einem flüssigen Elektrolyt dissoziieren und dabei ein Dielektrikum bilden, das wenige Atomlagen dick ist und eine große Elektrodenoberfläche aufweist.

In einer weiteren Ausgestaltung der Erfindung ist der zweite elektrische Verbraucher an die erste Spannungsversorgungseinheit angeschlossen. Bei dem zweiten elektrischen Verbraucher handelt es sich um einen nicht-spannungssensitiven bzw. nicht-startspannungssensitiven Verbraucher. Folglich muss dieser Verbraucher nicht zwingend mit einer stabilisierten Spannung versorgt werden. Somit ist es nicht erforderlich, ihn auch nur zeitweise über die aus der Speichereinheit und der ersten Spannungsversorgungseinheit gebildete Reihenschaltung zu versorgen. Er kann direkt, d.h. ohne zwischengeschaltetes Schaltelement an die erste Spannungsversorgungseinheit angeschlossen werden. Dadurch besteht jederzeit die Möglichkeit, den zweiten Verbraucher zu betreiben und mit dem dabei durch ihn fließenden Strom die Speichereinheit aufzuladen.

Vorteilhafterweise wird die Erfindung in einem als Parallelhybrid aufgebauten Hybridfahrzeug eingesetzt, weswegen das Fahrzeug eine zweite elektrische Maschine aufweist, die dazu ausgebildet ist, allein oder in Kombination mit dem Verbrennungsmotor angetriebene Räder des Fahrzeugs anzutreiben. In diesem Fall handelt es sich bei der zweiten Spannungsversorgungseinheit um einen Spannungswandler, der eingangsseitig mit einem die zweite elektrische Maschine enthaltenden Schaltkreis verbunden ist. Da bei einem Hybridfahrzeug die zweite elektrische Maschine mit elektrischer Energie versorgt wird, verfügt ein Hybridfahrzeug zwangsläufig über eine eigens hierfür ausgebildete zweite Speichereinheit, die ebenfalls in dem Schaltkreis angeordnet ist. Somit kann der Spannungswandler entweder über die zweite Speichereinheit oder über die zweite elektrische Maschine gespeist werden, wodurch das bedarfsabhängige Bereitstellen einer Ladespannung durch den Spannungswandler sichergestellt ist.

Ist das Fahrzeug dagegen als konventionelles Fahrzeug ausgebildet, dann handelt es sich bei der zweiten Spannungsversorgungseinheit vorteilhafterweise um einen im Fahrzeug vorhandenen Generator. Somit ist auch in diesem Fall das bedarfsabhängige Bereitstellen einer Ladespannung sichergestellt. Bei einem konventionellen Fahrzeug ist es erforderlich, die Speichereinheit nach erfolgtem Wiederstarten des Verbrennungsmotors aufzuladen. Da der Verbrennungsmotor nach einem Wiederstart läuft, wird der Generator angetrieben und es steht somit eine für das Laden der Speichereinheit erforderliche Ladespannung zur Verfügung.

In einer weiteren Ausgestaltung der Erfindung ist die Steuereinheit ferner dazu ausgebildet, ein Fahrerzugangssignal auszuwerten, und bei erkanntem Fahrerzugang die Speichereinheit initial zu laden. Diese Maßnahme hat den Vorteil, dass bereits bei Inbetriebnahme des Fahrzeugs bzw. bei Fahrtbeginn die Speichereinheit aufgeladen ist und somit ggf. ein Stabilisieren der an dem ersten elektrischen Verbraucher anliegenden Spannung erfolgen kann. Der Fahrerzugang wird beispielsweise durch Betätigen der Schließanlage des Fahrzeugs durch den Fahrer oder durch Erfassen eines den Zugang ermög-, lichenden Signals erkannt, wie es bei schlüssellosen Zugangssystemen verwendet wird. Alternativ kann anstatt des Fahrerzugangs auch die Zündungbetätigung als auslösendes Kriterium für die Initialladung herangezogen werden.

Um für das Stabilisieren der an dem ersten, spannungssensitiven elektrischen Verbraucher anliegenden Spannung keine zusätzlichen Komponenten einsetzen zu müssen und somit keinen zusätzlichen Bauraum zu benötigen bzw. keine zusätzlichen Kosten zu erzeugen, wird bei der Realisierung des erfindungsgemäßen Verfahrens bevorzugt auf bereits im Fahrzeug vorhandene Komponenten zurückgegriffen. So handelt es sich vorteilhafterweise bei der ersten elektrischen Maschine um einen im Fahrzeug vorhandenen Starter und bei der ersten Spannungsversorgungseinheit um eine im Fahrzeug vorhandene Bordnetzbatterie.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines mit der Erfindung ausgestatteten konventionellen Fahrzeugs,
- Fig. 2: einen schematischen Schaltplan der bei dem konventionellen Fahrzeug für das Stabilisieren der an dem ersten elektrischen Verbraucher anliegenden Spannung bzw. das Starten des Verbrennungsmotors eingesetzten elektrischen Komponenten,
- Fig. 3: eine schematische Darstellung eines mit der Erfindung ausgestatteten Hybridfahrzeugs,
- Fig.4: einen schematischen Schaltplan der bei dem Hybridfahrzeug für das Stabilisieren der an dem ersten elektrischen Verbraucher anliegenden Spannung bzw. das Starten des Verbrennungsmotors eingesetzten elektrischen Komponenten.

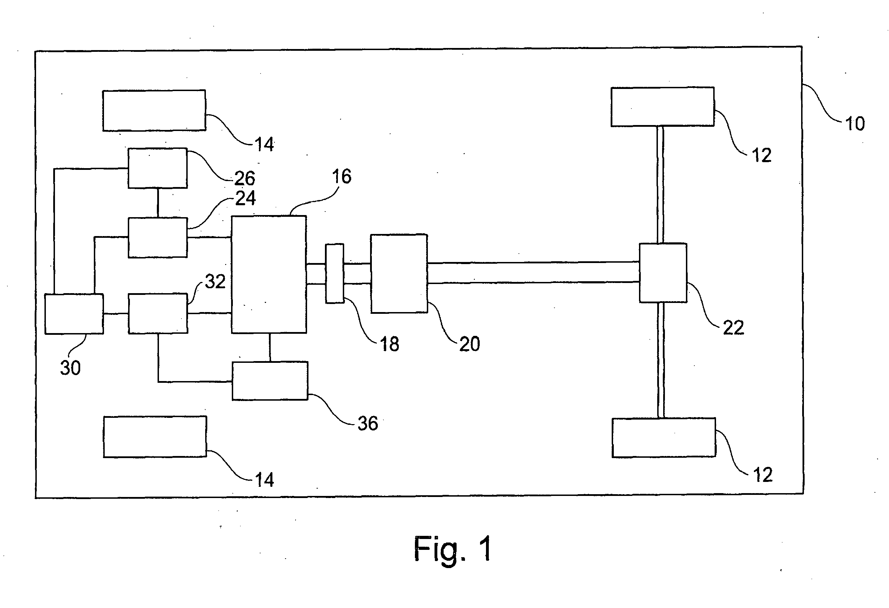

In Fig. 1 ist ein Fahrzeug 10 dargestellt, welches angetriebene Räder 12 und nicht-angetriebene Räder 14 aufweist. Das Fahrzeug 10 soll konventionell aufgebaut sein, was bedeutet, dass es als Antriebsmotor lediglich einen Verbrennungsmotor 16 aufweist. Der Verbrennungsmotor 16 ist zumindest zeitweise über eine Kupplung 18, ein Getriebe 20 und ein Differenzial 22 wirktechnisch mit den angetriebenen Rädern 12 verbindbar ist, um an diesen ein den Vortrieb des Fahrzeugs 10 bewirkendes Drehmoment zu erzeugen. Der Verbrennungsmotor 16 wird über eine Motorsteuereinheit 24 angesteuert. Die hierfür benötigten Daten erhält die Motorsteuereinheit 24 von Sensoren 26. Bei diesen kann es sich um Sensoren handeln, mit denen verschiedene den Betriebszustand des Verbrennungsmotors 16 repräsentierende Größen erfasst werden, beispielsweise dessen Drehzahl und/oder Temperatur. Mit den Sensoren 26 können aber auch den Betrieb des Verbrennungsmotors 16 beeinflussende Größen erfasst werden, wie beispielsweise die Stellung eines nicht dargestellten Fahrpedals und/oder die Temperatur der dem Verbrennungsmotor 16 zugeführten Luft.

In der Motorsteuereinheit 24 ist eine sogenannte Start-Stopp-Automatik implementiert, mit der der Verbrennungsmotor 16 bei Stillstand des Fahrzeugs 10 abgeschaltet wird. Bei Vorliegen einer definierten Einschaltbedingung wird der Verbrennungsmotor 16 automatisiert wieder eingeschaltet. Es wird ein Wiederstarten des Verbrennungsmotors 16 durchgeführt, welches sich von demjenigen Starten des Verbrennungsmotors 16 unterscheidet, welches initial bei Fahrtbeginn bei kaltem Verbrennungsmotor 16 durchzuführen ist. Für das Wiederstarten ist eine noch zu beschreibende erste elektrische Maschine 28, die den Verbrennungsmotor 16 antreibt, mit einem entsprechend hohen Strom zu versorgen. Das Bereitstellen eines solchen Stroms kann in einem Bordnetz des Fahrzeugs 10 zu Instabilitäten in der Versorgungsspannung führen. Um diese Instabilitäten zu vermeiden bzw. zu beheben bzw. um ein Stabilisieren der Versorgungsspannung vornehmen zu können, ist das Fahrzeug 10 erfindungsgemäß mit einer Steuereinheit 30 und einer durch diese angesteuerten Starteinheit 32 ausgestattet.

Die Steuereinheit 30 ist dazu ausgebildet, festzustellen, ob ein Stabilisieren der Versorgungsspannung vorzunehmen ist oder.nicht. Hierzu wertet sie aus, ob ein Wiederstarten des Verbrennungsmotors 16 durch die erste elektrische Maschine 28 durchzuführen ist. Hierfür wird der Steuereinheit 30 ausgehend von der Motorsteuereinheit 24 ein Signal zugeführt, das ein durchzuführendes Wiederstarten des Verbrennungsmotors 16 repräsentiert. Solange ein Wiederstarten nicht durchzuführen ist, wird die Steuereinheit 30 keine die Versorgungsspannung stabilisierenden Maßnahmen einleiten. Sobald allerdings ein Wiederstarten durchzuführen ist, leitet die Steuereinheit 30 stabilisierende Maßnahmen ein. In der Motorsteuereinheit 24 wird auf ein durchzuführendes Wiederstarten erkannt, wenn in einem Fahrzeugruhezustand ein Anfahrsignal vorliegt. Der Fahrzeugruhezustand ist dabei so definiert, dass das Fahrzeug 10 steht und der Verbrennungsmotor 16 steht oder eine Motordrehzahl aufweist, die zwischen einer Abstelldrehzahl und dem Wert Null liegt. Es ist auch denkbar, dass das Erkennen des durchzuführenden Wiederstartens, bei entsprechender Zuführung der hierfür benötigten Größen, direkt in der Steuereinheit 30 erfolgt. Als Anfahrsignal kommt beispielsweise ein Signal in Frage, welches die Betätigung eines nicht dargestellten Kupplungspedals repräsentiert.

Neben den zuvor genannten Sensoren umfassen die Sensoren 26 auch Sensoren zum Erfassen eines Fahrerzugangs. Ein entsprechendes Fahrerzugangssignal wird der Steuereinheit 30 zugeführt, um bei erkanntem Fahrerzugang Maßnahmen einleiten zu können, die ein initiales Laden einer noch zu beschreibenden Speichereinheit 34 ermöglichen.

Der Verbrennungsmotor 16 steht mit einer zweiten Spannungsversorgungseinheit 36 in Wirkverbindung, wobei es sich hierbei um einen Generator handelt. Beim Betrieb treibt der Verbrennungsmotor 16 den Generator 36 an, der dann eine Spannung bereitstellt, die bei der erfindungsgemäßen Vorrichtung als Ladespannung eingesetzt wird.

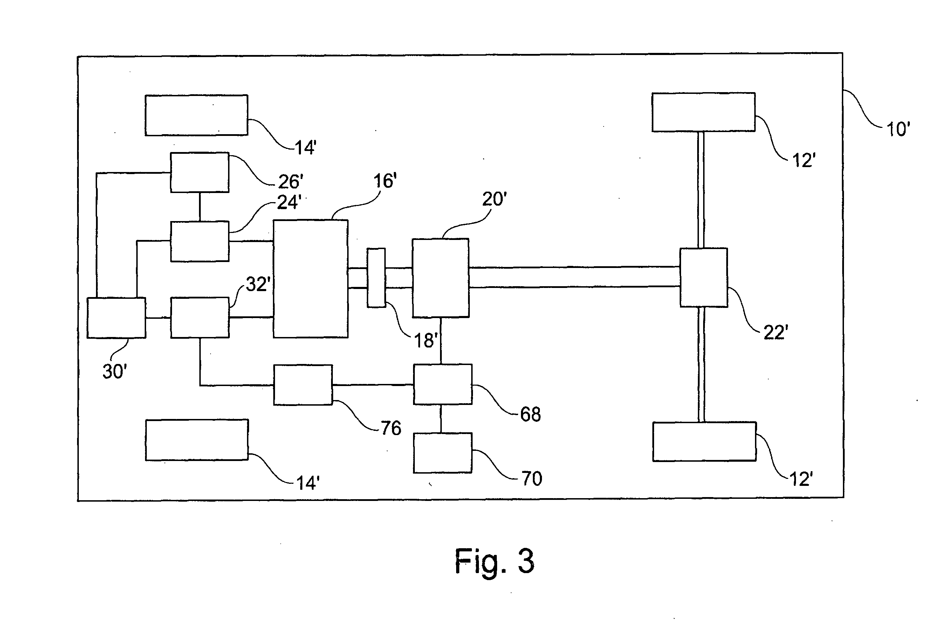

Die in Fig. 1 gewählte Darstellung, der eine bestimmte Aufteilung zwischen den einzelnen Komponenten zu entnehmen ist, soll keine einschränkende Wirkung haben. Selbstverständlich ist auch ein anderer Zuschnitt einzelner Komponenten mit einer sich daraus ergebenden anderen funktionellen Aufteilung denkbar. Entsprechendes gilt für die noch zu beschreibende Fig. 3.

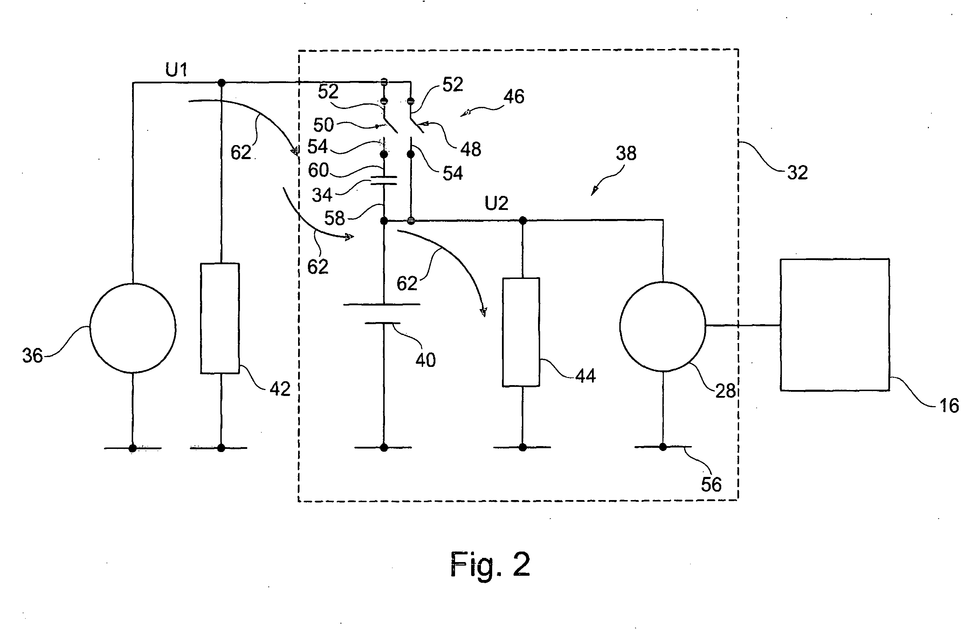

Anhand des in Fig. 2 dargestellten schematisierten Schaltplans werden der Aufbau der Starteinheit 32 sowie sowohl für die Steuereinheit 30 als auch für die Starteinheit 32 deren Funktionalität erläutert. Aus Gründen der Übersichtlichkeit ist die Steuereinheit 30 in Fig. 2 nicht dargestellt.

Mittels der Steuereinheit 30 und der Starteinheit 32 kann die Versorgungsspannung U2 in einem Bordnetz 38 des Fahrzeugs 10 für bestimmte elektrische Verbraucher stabilisiert werden. Bei dem konventionell aufgebauten Fahrzeug 10 wird dies beim Wiederstarten des Verbrennungsmotors 16 durchgeführt. Die Versorgungsspannung U2 wird von einer ersten Spannungsversorgungseinheit 40 bereitgestellt, wobei es sich hierbei um die Bordnetzbatterie handelt. Das Bordnetz 38 weist eine Anzahl erster elektrischer Verbraucher 42 auf, von denen einer exemplarisch dargestellt ist. Ferner weist das Bordnetz 38 eine Anzahl zweiter elektrischer Verbraucher 44 auf, von denen ebenfalls einer exemplarisch dargestellt ist. Bei den ersten elektrischen Verbrauchern 42 handelt es sich um spannungssensitive Verbraucher, wohingegen es sich bei den zweiten elektrischen Verbrauchern 44 um nicht-spannungssensitive Verbraucher handelt. In der bereits erwähnten und als Superkondensator ausgeführten Speichereinheit 34 wird elektrische Energie gespeichert. Die bereits erwähnte zweite Spannungsversorgungseinheit 36, die hier als Generator ausgebildet ist, stellt eine Ladespannung U1 bereit. Bei der ersten elektrischen Maschine 28 handelt es sich beispielsweise um den im Fahrzeug 10 ohnehin verbauten Starter.

Die Starteinheit 32 weist ferner eine Schalteinheit 46 auf, die wiederum ein erstes Schaltelement 48 und ein zweites Schaltelement 50 aufweist, wobei die beiden Schaltelemente beispielsweise als Halbleiterelemente, bevorzugt als MOSFETs ausgeführt sein können. Jedes der beiden Schaltelemente 48, 50 weist einen ersten Schaltelementanschluss 52 und einen zweiten Schaltelementanschluss 54 auf, wobei die beiden ersten Schaltelementanschlüsse 52 elektrisch miteinander verbunden sind.

Wie der Darstellung in Fig. 2 zu entnehmen ist, weisen die erste elektrische Maschine 28, die zweite Spannungsversorgungseinheit 36, die erste Spannungsversorgungseinheit 40, der erste elektrische Verbraucher 42 und der zweite elektrische Verbraucher 44 jeweils zwei Anschlüsse auf, von denen einer mit einem Bezugspotential 56, hier Masse, verbunden ist. Die nicht mit dem Bezugspotenzial 56 verbundenen Anschlüsse sind wie folgt zur Realisierung elektrischer Verbindungen kontaktiert: Für die zweite Spannungsversorgungseinheit 36 und den ersten elektrischen Verbraucher 42 sind die jeweiligen Anschlüsse mit den ersten Schaltelementanschlüssen 52 verbunden. Für die erste elektrische Maschine 28, die erste Spannungsversorgungseinheit 40 und den zweiten elektrischen Verbraucher 44 sind die jeweiligen Anschlüsse sowohl mit dem zweiten Schaltelementanschluss 54 des ersten Schaltelements 48 als auch mit einem ersten Speichereinheitenanschluss 58 der Speichereinheit 34 verbunden. Ein zweiter Speichereinheitenanschluss 60 der Speichereinheit 34 ist mit dem zweiten Schaltelementanschluss 54 des zweiten Schaltelements 50 verbunden.

Wie bereits ausgeführt, ist die Steuereinheit 30 dazu ausgebildet, festzustellen, ob ein Stabilisieren der an dem ersten elektrischen Verbraucher anliegenden Spannung aufgrund eines Wiederstarts des Verbrennungsmotors 16 vorzunehmen ist. Solange solch ein Stabilisieren nicht vorzunehmen ist, steuert die Steuereinheit 30 die Schalteinheit 46 derart an, dass diese einen zweiten Schaltzustand einnimmt, bei dem das erste Schaltelement 48 geschlossen und das zweite Schaltelement 50 geöffnet ist. Somit ist der erste elektrische Verbraucher 42 allein an die erste Spannungsversorgungseinheit 40 angeschlossen und wird durch deren Spannung versorgt. Sobald besagtes Stabilisieren vorzunehmen ist, steuert die Steuereinheit 30 die Schalteinheit 46 derart an, dass diese einen ersten Schaltzustand einnimmt, bei dem das erste Schaltelement 48 geöffnet ist und das zweite Schaltelement 50 geschlossen ist. Somit ist der erste elektrische Verbraucher 42 an eine aus der Speichereinheit 34 und der ersten Spannungsversorgungseinheit 40 gebildeten Reihenschaltung angeschlossen. Aufgrund der zusätzlichen, von der Speichereinheit 34 bereitgestellten Spannung erhält der erste elektrische Verbraucher 42 während des Wiederstartvorgangs eine stabile Spannungsversorgung. Sollte der von der Speichereinheit 34 bereitgestellte Strom nicht ausreichen, den ersten elektrischen Verbraucher 42 während des kompletten Wiederstartvorgangs zu stabilisieren, so kann die zweite Spannungsversorgungseinheit 36 zusätzlich Energie zum Stabilisieren bereitstellen.

Anschließend an das vorgenommene Stabilisieren bzw. nach Beenden des Wiederstartvorgangs steuert die Steuereinheit 30 die zweite Spannungsversorgungseinheit 36, den zweiten elektrischen Verbraucher 44 und die Schalteinheit 46 folgendermaßen an: Die Schalteinheit 46 wird so angesteuert, dass diese weiterhin den ersten Schaltzustand einnimmt. Die zweite Spannungsversorgungseinheit 36 wird so angesteuert, dass diese eine Ladespannung U1 bereitstellt, deren Wert größer ist, als die von der ersten Spannungsversorgungseinheit 40 bereitgestellte Versorgungsspannung U2. Der zweite elektrische Verbraucher 44 wird so angesteuert, dass durch diesen zumindest zeitweise ein elektrischer Strom fließt, und ein Laden der Speichereinheit 34 über einen von der zweiten Spannungsversorgungseinheit 36 und dem zweiten elektrischen Verbraucher 44 ausgebildeten Strompfad 62 möglich ist. Während des Ladevorgangs wird die von der zweiten Versorgungseinheit bereitgestellte Ladespannung U1 beispielsweise auf einen Wert von ungefähr 15,5V angehoben, so dass sich bei einer Versorgungsspannung U2 in der Größenordnung von ungefähr 12V an der Speichereinheit 34 eine Spannung in der Größenordnung von ungefähr 3,5V einstellt. Nach Beendigung des Ladevorgangs steuert die Steuereinheit 30 zumindest die Schalteinheit 46 an und zwar so, dass erste Schaltelement 48 geschlossen und das zweite Schaltelement 50 geöffnet ist.

Wird ein Fahrerzugang erkannt, wird ein initiales Laden der Speichereinheit 34 veranlasst, welches vorzugsweise zeitlich unmittelbar nach dem Starten des Verbrennungsmotors 16 durch den Fahrer erfolgt. Bei diesem Laden steuert die Steuereinheit 30 die zweite Spannungsversorgungseinheit 36, den zweiten elektrischen Verbraucher 44 und die Schalteinheit 46 entsprechender so an, wie dies vorstehend im Zusammenhang mit dem sich an einen Wiederstartvorgang anschließenden Ladevorgang beschrieben ist.

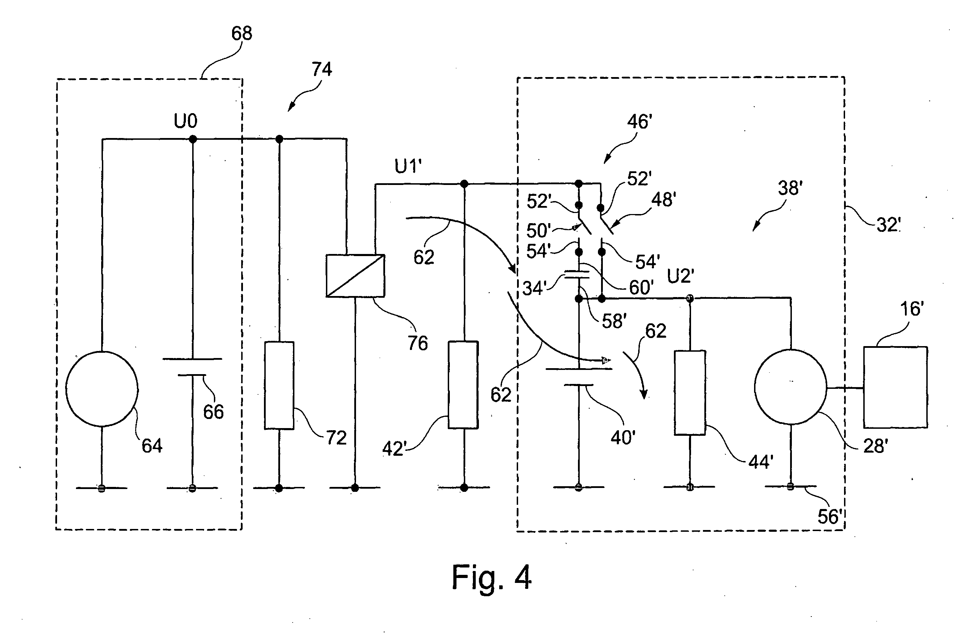

Aus Gründen der Übersichtlichkeit wurde in Fig. 2 auf die Darstellung weiterer Komponenten verzichtet, die üblicherweise in einem Fahrzeug für den Betrieb der in Fig. 2 dargestellten Komponenten vorhanden sind. Als Beispiel sei hier ein Schalter angeführt, mit dem die erste elektrische Maschine 28 von der ersten Spannungsversorgungseinheit 38 getrennt werden kann. Das Weglassen dieser Komponenten soll keine einschränkende Wirkung haben. Entsprechendes gilt für die Darstellung in Fig. 4.

Fig. 3 zeigt ein als Hybridfahrzeug aufgebautes Fahrzeug 10', welches als Parallelhybridfahrzeug ausgebildet ist, vorzugsweise mit der Funktionalität eines Plug-In-Hybrid. Das Fahrzeug 10' kann, muss aber nicht, mit einer Start-Stopp-Automatik ausgestattet sein, wobei hinsichtlich deren Funktionalität auf die vorstehenden, im Zusammenhang mit den Fig. 1 und 2 gemachten Ausführungen verwiesen sei. In den Fig. 3 und 4 dargestellte Komponenten, die über dieselbe oder eine entsprechende Funktionalität verfügen, wie Komponenten, die in den Fig. 1 und 2 dargestellt sind, sind mit derselben, allerdings mit einem Strich versehenen Bezugsziffer gekennzeichnet, wobei auf die im Zusammenhang mit den Fig. 1 und 2 gemachten Ausführungen verwiesen wird. Nachfolgend sind lediglich die zusätzlichen Komponenten bzw. die geänderten Funktionalitäten beschrieben.

Zusätzlich zu dem Verbrennungsmotor 16' verfügt das Fahrzeug 10'. über eine zweite elektrische Maschine 64, die über das Getriebe 20' und das Differenzial 22' die angetriebenen Räder 12' des Fahrzeugs 10' antreiben kann. Dies kann allein oder in Kombination mit dem Verbrennungsmotor 16' erfolgen. Die zweite elektrische Maschine 64 kann beispielsweise als Synchronmaschine, insbesondere als Hybrid-Synchronmaschine, oder als Asynchronmaschine ausgebildet sein. Sie wird von einem Hochvoltspeicher 66 mit einer elektrischen Hochspannung U0 versorgt, die in der Größenordnung von 200V bis 400V liegen kann. Die zweite elektrische Maschine 64 und der Hochvoltspeicher 66 sind in Fig. 3 zu einer elektrischen Antriebseinheit 68 zusammengefasst, die von einer entsprechend eingerichteten Leistungselektronik 70 angesteuert wird. Neben der zweiten elektrischen Maschine 64 werden auch eine Anzahl dritter elektrischer Verbraucher 72 mit der Hochspannung U0 versorgt, von denen einer exemplarisch dargestellt ist. Beispielsweise kann es sich bei einem dritten elektrischen Verbraucher 72 um einen Klimakompressor handeln. Der vorstehend angegebene Wertebereich für sie Spannung U0 soll keine einschränkende Wirkung haben. Es ist auch denkbar, die Erfindung im Zusammenhang mit Elektrifizierungsarchitekturen einzusetzen, bei denen die Spannung U0 weit unterhalb der vorgenannten Untergrenze bzw. weit oberhalb der vorgenannten Obergrenze liegt, beispielsweise sind Werte für die Spannung U0 von 20V bis 600V vorstellbar.

Die zweite elektrische Maschine 64, der Hochvoltspeicher 66 und die dritten elektrischen Verbraucher 72 bilden einen Schaltkreis 74, an den ein Spannungswandler 76 mit seiner Eingangsseite angeschlossen ist. Der Spannungswandler 76 wandelt die Hochspannung U0 in eine Niederspannung U1', die in der Größenordnung der von der ersten Spannungsversorgungseinheit 40' bereitgestellten Versorgungsspannung U2' liegt. Der Spannungswandler 76 stellt eine zweite Spannungsversorgungseinheit dar, mit der eine Ladespannung U1' bereit gestellt werden kann. Bei dem Spannungswandler 76 handelt es sich um einen Gleichspannungswandler, der zumindest ein schaltbares Halbleiterelement enthält. Durch Verändern der Schaltzeiten dieses Halbleiterelements kann die von dem Spannungswandler 76 bereitgestellte Spannung U1' eingestellt werden. Bei den Spannungen U0', U1' und U2' handelt es sich um Gleichspannungen. Entsprechendes gilt für die Spannungen U1 und U2.

An dieser Stelle sei erwähnt, dass die schematische Darstellung in Fig. 3 auf die wesentlichen Komponenten des Antriebsstranges reduziert ist. Die dieser Darstellung entnehmbare Anbindung der zweiten elektrischen Maschine 64 an das Getriebe 20' soll keine einschränkende Wirkung auf die konkrete mechanische Ausgestaltung haben. Selbstverständlich kann die zweite elektrische Maschine 64 beispielsweise wirktechnisch zwischen der Kupplung 18' und dem Getriebe 20' eingebunden sein.

Das Hybridfahrzeug 10' ist mit einer Zustart-Funktionalität ausgestattet, mit der ein Zustart des Verbrennungsmotor 16' in bestimmten Betriebszuständen des Fahrzeugs 10' möglich ist. Bei diesen Betriebszuständen fährt das Fahrzeug und weist somit eine Fahrzeuggeschwindigkeit auf. Der Verbrennungsmotor 16' ist allerdings nicht wirktechnisch mit den angetriebenen Rädern 12' zum Erzeugen eines auf diese wirkenden Drehmoments verbunden. Das für den Vortrieb des Fahrzeugs 10' benötigte Drehmoment stammt von der zweiten elektrischen Maschine 64. Während solch einer, durch die zweite elektrische Maschine 64 bewirkten Fahrzeugbewegung soll nun das für den Vortrieb erforderliche Drehmoment nicht mehr von der zweiten elektrischen Maschine 64, sondern von dem Verbrennungsmotor 16' an den angetriebenen Rädern 12' erzeugt werden. Beispielsweise weil die Fahrzeuggeschwindigkeit auf einen Wert gesteigert werden soll, bei dem das Drehmoment vorteilhafterweise nicht mehr von der zweiten elektrischen Maschine 64, sondem von dem Verbrennungsmotor 16' bereitgestellt wird. Um den Übergang in der Drehmomentbereitstellung für den Fahrer nicht spürbar, d.h. ruckfrei zu gestalten, ist es notwendig, dass der Verbrennungsmotor 16' beim Zustarten innerhalb einer kurzen Zeitdauer ein definiertes großes Drehmoment bereitstellt. Das Zustarten erfolgt über eine erste elektrische Maschine 28'. Entsprechend dem zuvor beschriebenen Wiederstarten ist die erste elektrische Maschine 28' hierfür mit einem entsprechend hohen Strom zu versorgen. Auch beim Zustarten kann das Bereitstellen eines solchen Stroms in dem Bordnetz 38' des Fahrzeugs 10' zu Instabilitäten in der Versorgungsspannung U2' führen. Um diese Instabilitäten zu vermeiden bzw. zu beheben bzw. um ein Stabilisieren der Versorgungsspannung für einzelne elektrische Verbraucher vornehmen zu können, sind eine Steuereinheit 30' und eine durch diese angesteuerte Starteinheit 32' entsprechend ausgestaltet.

Die Steuereinheit 30' ist dazu ausgebildet, auszuwerten, ob ein Zustarten des Verbrennungsmotors 16' durch die erste elektrische Maschine 28' durchzuführen ist. Hierfür wird der Steuereinheit 30' ausgehend von der Motorsteuereinheit 24' ein entsprechendes Signal zugeführt, das ein durchzuführendes Zustarten des Verbrennungsmotors 16' repräsentiert. Solange ein Zustarten nicht durchzuführen ist, wird die Steuereinheit 30' keine Maßnahmen einleiten, mit denen die an einem ersten elektrischen Verbraucher 42' anliegende Spannung stabilisiert werden kann. Sobald allerdings ein Zustarten durchführen ist, leitet die Steuereinheit 30' stabilisierende Maßnahmen ein. In der Motorsteuereinheit 24' wird auf ein durchzuführendes Zustarten des Verbrennungsmotors 16' erkannt, wenn in einem Fahrzeugbewegungszustand eine Motormomentforderung vorliegt. Der Fahrzeugbewegungszustand ist dabei so definiert, dass das Fahrzeug 10' fährt und der Verbrennungsmotor 16' steht oder eine Motordrehzahl aufweist, die zwischen einer Abstelldrehzahl und dem Wert Null liegt. Es ist auch denkbar, dass das Erkennen des durchzuführenden Zustartens bei entsprechender Zuführung der hierfür benötigten Größen direkt in der Steuereinheit 30' erfolgt. Eine Motormomentanforderung liegt beispielsweise dann vor, wenn ein Signal vorliegt, das eine Betätigung eines nicht dargestellten Fahrpedals durch den Fahrer repräsentiert. Ergänzend und/oder alternativ kann ein Signal vorliegen, welches von einem Längsregelsystem erzeugt wird. Das Fahrzeug 10' ist mit entsprechenden Sensoren 26' ausgestattet.

Wie bereits erwähnt, kann das Hybridfahrzeug 10' ergänzend mit einer Start-Stopp-Automatik ausgestattet sein. Hinsichtlich der hierfür erforderlichen Ausgestaltung der einzelnen Komponenten sei auf die Ausführungen im Zusammenhang mit den Fig. 1 und 2 verwiesen.

Fig. 4 ist u. a. der Aufbau einer Starteinheit 32' zu entnehmen. Hinsichtlich deren konkreten Aufbaus sei auf die Ausführungen im Zusammenhang mit den Fig. 1 und 2 verwiesen. Was die Verschaltung der ersten elektrischen Maschine 28, der Speichereinheit 34, der ersten Spannungsversorgungseinheit 40, des ersten elektrischen Verbrauchers 42,des zweiten elektrischen Verbrauchers 44, der Schalteinheit 46 und des Spannungswandlers 76 angeht, so sei auf die Ausführungen zu Fig. 2 verwiesen, wobei hierbei die zweite Spannungsversorgungseinheit 36 dem Spannungswandler 76 entspricht.

Durch den Einsatz der Steuereinheit 30' und der Starteinheit 32' kann die an dem ersten elektrischen Verbraucher 42' anliegende Spannung stabilisiert werden. Hierzu stellt die Steuereinheit 30' fest, ob ein Stabilisieren aufgrund eines durchzuführenden Wiederstarts des Verbrennungsmotors 16' vorzunehmen ist. Solange solch ein Stabilisieren nicht vorzunehmen ist, steuert die Steuereinheit 30' die Schalteinheit 46' derart an, dass diese den zweiten Schaltzustand einnimmt. Somit ist der erste elektrische Verbraucher 42' allein an die erste Spannungsversorgungseinheit 40' angeschlossen. Sobald besagtes Stabilisieren vorzunehmen ist, steuert die Steuereinheit 30' die Schalteinheit 46' derart an, dass diese den ersten Schaltzustand einnimmt. Somit ist der erste elektrische Verbraucher 42' an eine aus der Speichereinheit 34' und der ersten Spannungsversorgungseinheit 40' gebildete Reihenschaltung angeschlossen. Sollte der von der Speichereinheit 34' bereitgestelite Strom nicht ausreichen, den ersten elektrischen Verbraucher 42' während des kompletten Zustartvorgangs zu stabilisieren, so kann der Spannungswandler 76 zusätzlich Energie zum Stabilisieren bereitstellen.

Anschließend an das vorgenommene Stabilisieren der an dem ersten elektrischen Verbraucher 42' anliegenden Spannung bzw. nach Beenden des Wiederstartvorgangs steuert die Steuereinheit 30' den Spannungswandler 76, den zweiten elektrischen Verbraucher 44' und die Schalteinheit 46' folgendermaßen an: Die Schalteinheit 46' wird so angesteuert, dass diese weiterhin den ersten Schaltzustand einnimmt. Der Spannungswandler 76 wird so angesteuert, dass dieser eine Ladespannung U1' bereitstellt, deren Wert größer ist, als die von der ersten Spannungsversorgungseinheit 40' bereitgestellte Versorgungsspannung U2'. Der zweite elektrische Verbraucher 44' wird so angesteuert, dass zumindest zeitweise ein elektrischer Strom fließt, und somit ein Laden der Speichereinheit 34' über einen von dem Spannungswandler 76 und dem zweiten elektrischen Verbraucher 44' ausgebildeten Strompfad 62' möglich ist. Während des Ladevorgangs wird der Spannungswandler so angesteuert, dass die Ladespannung U1' beispielsweise auf einen Wert von ungefähr 15,5V angehoben wird, so dass sich bei einer Versorgungsspannung U2' in der Größenordnung von ungefähr 12V an der Speichereinheit 34' eine Spannung in der Größenordnung von ungefähr 3,5V einstellt. Nach Beendigung des Ladevorgangs steuert die Steuereinheit 30' zumindest die Schalteinheit 46' an und zwar so, dass erste Schaltelement 48' geschlossen und das zweite Schaltelement 50 geöffnet ist.

Wird ein Fahrerzugang erkannt, wird ein initiales Laden der Speichereinheit 34' veranlasst. Hinsichtlich der Vorgehensweise wird auf die Ausführungen im Zusammenhang mit Fig. 2 verwiesen, wobei hier anstelle der zweiten Spannungsversorgungseinheit 36 der Spannungswandler 76 angesteuert wird.

An dieser Stelle sei nochmals festgehalten: je nach Ausstattungsgrad des Hybridfahrzeugs 10' unterscheidet sich der von der Steuereinheit 30' und der Starteinheit 32'ausführbare Funktionalitätsumfang. Ist das Hybridfahrzeug 10' nicht mit einer Start-Stopp-Automatik ausgestattet, so können beide Einheiten lediglich einen Zustartvorgang durchführen. Ist das Hybridfahrzeug 10' dagegen mit einer Start-Stopp-Automatik ausgestattet, so können beide Einheiten zusätzlich noch einen Wiederstartvorgang durchführen.

Abschließend seien nochmals die Vorteile der Erfindung dargelegt: Mit der Erfindung ist es möglich, die Energieversorgung in einem Bordnetz beim Zustarten und/oder Wiederstarten eines Verbrennungsmotors allein durch ohnehin im Fahrzeug verbaute Komponenten zu bewerkstelligen. Es sind keine zusätzlichen Komponenten, wie beispielsweise Zustartbatterien erforderlich. Außerdem ist es nicht erforderlich, diejenige elektrische Maschine, die in einem Hybridfahrzeug für die Realisierung des Vortriebs vorgesehen ist, größer zu dimensionieren, als dies für die Erfüllung der Vortriebsanforderungen erforderlich ist. Außerdem kann durch die erfindungsgemäße vorteilhafte Verschaltung im Bordnetz und die damit einhergehende Betriebsstrategie auf den Einsatz von Ladeschaltern zum Laden der Speichereinheit verzichtet werden. Insgesamt kann das Bordnetz kostengünstig aufgebaut werden.

Vorstehend wurden das erfindungsgemäße Bordnetz und das zugehörige Verfahren im Zusammenhang mit dem Stabilisieren einer an einem in einem Bordnetz eines Fahrzeugs angeordneten ersten elektrischen Verbraucher anliegenden Spannung dargelegt. Das Bordnetz und das Verfahren können aber auch hinsichtlich des Startens, insbesondere des Zustartens und des Wiederstartens eines Verbrennungsmotors betrachtet werden, bei dem ein Stabilisieren der Versorgungsspannung für einzelne elektrische Verbraucher durchgeführt wird.

### Bezugszeichenliste

- 10: Fahrzeug
- 12: angetriebene Räder
- 14: nicht-angetriebene Räder
- 16: Verbrennungsmotor
- 18: Kupplung
- 20: Getriebe
- 22: Differenzial
- 24: Motorsteuereinheit
- 26: Sensoren
- 28: erste elektrische Maschine
- 30: Steuereinheit
- 32: Starteinheit
- 34: Speichereinheit
- 36: zweite Spannungsversorgungseinheit
- 38: Bordnetz
- 40: erste Spannungsversorgungseinheit
- 42: erste elektrische Verbraucher
- 44: zweite elektrische Verbraucher
- 46: Schalteinheit
- 48: erstes Schaltelement
- 50: zweites Schaltelement
- 52: erster Schaltelementanschluss
- 54: zweiter Schaltelementanschluss
- 56: Bezugspotential
- 58: erster Speichereinheitenanschluss
- 60: zweiter Speichereinheitenanschluss
- 62: Strompfad
- 64: zweite elektrische Maschine
- 66: Hochvoltspeicher
- 68: elektrische Antriebseinheit
- 70: Leistungselektronik
- 72: dritte elektrische Verbraucher
- 74: Schaltkreis
- 76: Spannungswandler

## Patentansprüche

1. Bordnetz für ein Fahrzeug , wobei das Bordnetz (38,38') neben zumindest einem ersten, spannungssensitiven elektrischen Verbraucher (42, 42') ferner zumindest einen zweiten, nicht-spannungssensitiven elektrischen Verbraucher (44, 44') aufweist und eine erste Spannungsversorgungseinheit (40, 40'), die eine Versorgungsspannung (U2, U2') bereitstellt, wobei desweiteren vorgesehen sind:
eine Speichereinheit (34, 34'), die dazu ausgebildet ist, zumindest zeitweise elektrische Energie zu speichern,
eine zweite Spannungsversorgungseinheit (36, 76) zum Bereitstellen einer Ladespannung (U1, U1'),
eine Schalteinheit (46, 46'), an die zumindest der erste, spannungssensitive elektrische Verbraucher (42, 42'), die Speichereinheit (34, 34'), die erste Spannungsversorgungseinheit (40, 40') und die zweite Spannungsversorgungseinheit (36, 76) angeschlossen sind, und
eine Steuereinheit (30, 30'), **dadurch gekennzeichnet, dass** Steuereinheit (30, 30') dazu ausgebildet ist, zum Stabilisieren einer an dem ersten, spannungssensitiven elektrischen Verbraucher (42, 42') anliegenden Spannung festzustellen, ob ein Stabilisieren der an dem ersten, spannungssensitiven elektrischen Verbraucher (42, 42') anliegenden Spannung vorzunehmen ist, wobei die Steuereinheit (30, 30') ferner dazu ausgebildet ist, solange ein Stabilisieren nicht vorzunehmen ist, die Schalteinheit (46, 46') derart anzusteuern, dass der erste, spannungssensitive elektrische Verbraucher (42, 42') an die erste Spannungsversorgungseinheit (40, 40') angeschlossen ist, und sobald ein Stabilisieren vorzunehmen ist, die Schalteinheit (46, 46') derart anzusteuern, dass der erste, spannungssensitive elektrische Verbraucher (42, 42') an eine aus der Speichereinheit (34, 34') und der ersten Spannungsversorgungseinheit (40, 40') gebildeten Reihenschaltung angeschlossen ist, um dadurch den ersten, spannungssensitiven elektrischen Verbraucher durch eine von der Reihenschaltung bereitgestellte Spannung zum Ausgleichen einer vorhandenen Verringerung der Versorgungsspannung (U2, U2') zu versorgen, wobei die Steuereinheit (30, 30') ferner dazu ausgebildet ist, anschließend an ein vorgenommenes Stabilisieren die zweite Spannungsversorgungseinheit (36, 76), den zweiten, nicht-spannungssensitiven elektrischen Verbraucher (44, 44') und die Schalteinheit (46, 46') jeweils zumindest zeitweise derart anzusteuern, dass die zweite Spannungsversorgungseinheit (36, 76) eine Ladespannung (U1, U1') bereitstellt, deren Wert größer ist, als die von der ersten Spannungsversorgungseinheit (40, 40') bereitgestellte Versorgungsspannung (U2, U2'), dass durch den zweiten, nicht-spannungssensitiven elektrischen Verbraucher (44, 44') zumindest zeitweise ein elektrischer Strom fließt, und dass ein Laden der Speichereinheit (34, 34') über einen von der zweiten Spannungsversorgungseinheit (36, 76) und dem zweiten, nicht-spannungssensitiven elektrischen Verbraucher (44, 44') ausgebildeten Strompfad (62, 62') möglich ist.

2. Bordnetz nach Anspruch 1, **dadurch gekennzeichnet, dass** das Fahrzeug (10, 10') einen Verbrennungsmotor (16, 16') und eine erste elektrische Maschine (28, 28') aufweist, wobei die erste elektrische Maschine (28, 28') dazu ausgebildet ist, den Verbrennungsmotor (16, 16') zumindest zeitweise anzutreiben, wobei die Steuereinheit (30, 30') ferner dazu ausgebildet ist, zum Feststellen, ob ein Stabilisieren der an dem ersten, spannungssensitiven elektrischen Verbraucher (42, 42') anliegenden Spannung vorzunehmen ist, auszuwerten, ob ein Wiederstarten und/oder Zustarten des Verbrennungsmotors (16, 16') durch die erste elektrische Maschine (28, 28') durchzuführen ist.

3. Bordnetz nach Anspruch 2, **dadurch gekennzeichnet, dass** auf ein durchzuführendes Wiederstarten des Verbrennungsmotors (16, 16') erkannt wird, wenn in einem Fahrzeugruhezustand ein Anfahrsignal vorliegt, wobei in dem Fahrzeugruhezustand das Fahrzeug (10, 10') steht und der Verbrennungsmotor (16, 16') steht oder eine Motordrehzahl aufweist, die zwischen einer Abstelldrehzahl und dem Wert Null liegt, und/oder dass auf ein Zustarten des Verbrennungsmotors (16, 16') erkannt wird, wenn in einem Fahrzeugbewegungszustand eine Motormomentanforderung vorliegt, wobei in dem Fahrzeugbewegungszustand das Fahrzeug (10, 10') fährt und der Verbrennungsmotor (16, 16') steht oder eine Motordrehzahl aufweist, die zwischen einer Abstelldrehzahl und dem Wert Null liegt.

4. Bordnetz nach einem der vorstehenden Ansprüche, **dadurch gekennzeichnet, dass** die Schalteinheit (46, 46') ein erstes Schaltelement (48, 48') und ein zweites Schaltelement (50, 50') aufweist.

5. Bordnetz nach einem der vorstehenden Ansprüche, **dadurch gekennzeichnet, dass** die Speichereinheit (34, 34') als Kondensator, insbesondere als Superkondensator ausgebildet ist.

6. Bordnetz nach einem der vorstehenden Ansprüche, **dadurch gekennzeichnet, dass** der zweite, nicht-spannungssensitive elektrische Verbraucher (44, 44') an die erste Spannungsversorgungseinheit (40, 40') angeschlossen ist.

7. Bordnetz nach einem der vorstehenden Ansprüche, **dadurch gekennzeichnet, dass** das Fahrzeug (10, 10') eine zweite elektrische Maschine (64) aufweist, die dazu ausgebildet ist, allein oder in Kombination mit dem Verbrennungsmotor (16, 16') angetriebene Räder (12, 12') des Fahrzeugs (10, 10') anzutreiben, wobei es sich bei der zweiten Spannungsversorgungseinheit um einen Spannungswandler (76) handelt, der eingangsseitig mit einem die zweite elektrische Maschine (64) enthaltenden Schaltkreis (74) verbunden ist.

8. Bordnetz nach einem der Ansprüche 1 bis 6, **dadurch gekennzeichnet, dass** es sich bei der zweiten Spannungsversorgungseinheit (36) um einen im Fahrzeug vorhandenen Generator handelt.

9. Bordnetz nach einem der vorstehenden Ansprüche, **dadurch gekennzeichnet, dass** die Steuereinheit (10, 10') ferner dazu ausgebildet ist, ein Fahrerzugangssignal auszuwerten, und bei erkanntem Fahrerzugang die Speichereinheit (34, 34') initial zu laden.

10. Verfahren zum Stabilisieren einer an einem in einem Bordnetz (38, 38') eines Fahrzeugs (10, 10') angeordneten ersten, spannungssensitiven elektrischen Verbraucher (42, 42') anliegenden Spannung, wobei das Bordnetz (38, 38') neben zumindest einem ersten, spannungssensitiven elektrischen Verbraucher (42, 42') ferner zumindest einen zweiten, nicht-spannungssensitiven elektrischen Verbraucher (44, 44') aufweist und eine erste Spannungsversorgungseinheit (40, 40'), die eine Versorgungsspannung (U2, U2') bereitstellt, wobei des weiteren vorgesehen sind, eine Speichereinheit (34, 34'), die dazu ausgebildet ist, zumindest zeitweise elektrische Energie zu speichern, eine zweite Spannungsversorgungseinheit (36, 76) zum Bereitstellen einer Ladespannung (U1', U1'), eine Schalteinheit (46, 46'), an die zumindest der erste, spannungssensitive elektrische Verbraucher (42, 42'), die Speichereinheit (34, 34'), die erste Spannungsversorgungseinheit (40, 40') und die zweite Spannungsversorgungseinheit (36, 76) angeschlossen sind, und einer Steuereinheit (30, 30'), **dadurch gekennzeichnet, dass** in der Steuereinheit (30, 30') folgende Schritten ablaufen:
- Feststehen, ob ein Stabilisieren der an dem ersten, spannungssensitiven elektrischen Verbraucher (42, 42') anliegenden Spannung vorzunehmen ist,
- Ansteuern der Schalteinheit (46, 46') solange ein Stabilisieren nicht vorzunehmen ist derart, dass der erste, spannungssensitive elektrische Verbraucher (42, 42') an die erste Spannungsversorgungseinheit (40, 40') angeschlossen ist,
- Ansteuern der Schalteinheit (46, 46') sobald ein Stabilisieren vorzunehmen ist derart, dass der erste, spannungssensitive elektrische Verbraucher (42, 42') an eine aus der Speichereinheit (34, 34') und der ersten Spannungsversorgungseinheit (40, 40') gebildeten Reihenschaltung angeschlossen ist, um dadurch den ernsten, spannungssensitiven elektrischen Verbraucher durch eine von der Reihenschaltung bereitgestellte Spannung zum Ausgleichen einer vorhandenen Verringerung der Versorgungsspannung (U2, U2') zu versorgen, und
- Ansteuern der zweiten Spannungsversorgungseinheit (36, 76), des zweiten, nicht-spannungssensitiven elektrischen Verbrauchers (44, 44') und der Schalteinheit (46, 46') anschließend an ein vorgenommenes Stabilisieren jeweils zumindest zeitweise derart, dass die zweite Spannungsversorgungseinheit (36, 76) eine Ladespannung (U1, U1') bereitstellt, deren Wert größer ist, als die von der ersten Spannungsversorgungseinheit (40, 40') bereitgestellte Versorgungsspannung (U2, U2'), dass durch den zweiten, nicht-spannungssensitiven elektrischen Verbraucher (44, 44') zumindest zeitweise ein elektrischer Strom fließt, und dass ein Laden der Speichereinheit (34, 34') über einen von der zweiten Spannungsversorgungseinheit (36, 76) und dem zweiten, nicht-spannungssensitiven elektrischen Verbraucher (44, 44') ausgebildeten Strompfad (62, 62') möglich ist.

11. Computerprogrammprodukt mit einem Datenträger mit Programmcode, der dazu ausgebildet ist, ein Verfahren nach Anspruch 10 durchzuführen, wenn der Programmcode in einer Vorrichtung nach einem der Ansprüche 1 bis 9 abläuft.

## Claims

1. A vehicle electrical system for a vehicle, wherein the vehicle electrical system (38, 38'), in addition to at least one first, voltage-sensitive electric consumer (42, 42'), furthermore has at least a second, non-voltage-sensitive electric consumer (44, 44') and a first voltage supply unit (40, 40'), which provides a supply voltage (U2, U2'), wherein furthermore provided are:
a storage unit (34, 34'), which is configured to store electric energy at least temporarily,
a second voltage supply unit (36, 76) to provide a charge voltage (U1, U1'),
a switching unit (46, 46'), to which at least the first voltage-sensitive electric consumer (42, 42'), the storage unit (34, 34'), the first voltage supply unit (40, 40') and the second voltage supply unit (36, 76) are connected, and a control unit (30, 30'), **characterised in that** the control unit (30, 30) is configured, for the stabilisation of a voltage applied to the first, voltage-sensitive electric consumer (42, 42'), to determine whether a stabilisation of the voltage applied to the first, voltage-sensitive electric consumer (42, 42') is to be carried out, wherein the control unit (30, 30') is furthermore configured, as long as a stabilisation is not to be carried out, to activate the switching unit (46, 46') in such a way that the first, voltage-sensitive electric consumer (42, 42') is connected to the first voltage supply unit (40, 40'), and, as soon as a stabilisation is to be carried out, to activate the switching unit (46, 46') in such a way that the first, voltage-sensitive electric consumer (42, 42') is connected to a series connection formed from the storage unit (34, 34') and the first voltage supply unit (40, 40') in order to thereby supply the first, voltage-sensitive electric consumer by a voltage supplied by the series connection to compensate an existing reduction in the supply voltage (U2, U2'), wherein the control unit (30, 30') is furthermore configured, following a stabilisation that has taken place, to activate the second voltage supply unit (36, 76), the second, non-voltage-sensitive electric consumer (44, 44') and the switching unit (46, 46'), in each case at least temporarily, in such a way that the second voltage supply unit (36, 76) provides a charge voltage (U1, U1'), the value of which is greater than the supply voltage (U2, U2') provided by the first voltage supply unit (40, 40'), **in that** an electric current flows, at least temporarily, through the second, non-voltage-sensitive electric consumer (44, 44'), and **in that** it is possible to charge the storage unit (34, 34') via a current path (62, 62') configured by the second voltage supply unit (36, 76) and the second, non-voltage-sensitive electric consumer (44, 44').

2. A vehicle electrical system according to claim 1, **characterised in that** the a vehicle (10, 10') has an internal combustion engine (16, 16') and a first electric machine (28, 28'), wherein the first electric machine (28, 28') is configured to drive the internal combustion engine (16, 16'), at least temporarily, wherein the control unit (30, 30') is furthermore configured, to determine whether a stabilisation of the voltage applied to the first, voltage-sensitive electric consumer (42, 42') is to be carried out, to evaluate whether a restarting and/or additional starting of the internal combustion engine (16, 16') is to be carried out by the first electric machine (28, 28').

3. A vehicle electrical system according to claim 2, **characterised in that** a restarting of the internal combustion engine (16, 16') to be carried out, is detected when, in an idle state of the vehicle, a start-driving signal is present, wherein, in the idle state of the vehicle, the vehicle (10, 10') is stationary and the internal combustion engine (16, 16') has stopped or has a rotational engine speed between a shut-off speed and a zero value, and/or **in that** an additional starting of the internal combustion engine (16, 16') is detected when, in a moving state of the vehicle, an engine torque demand is present, wherein, in the moving state of the vehicle, the vehicle (10, 10') is travelling and the internal combustion engine (16, 16') has stopped or has a rotational engine speed between a shut-off speed and a zero value.

4. A vehicle electrical system according to any one of the preceding claims, **characterised in that** the switching unit (46, 46') has a first switching element (48, 48') and a second switching element (50, 50').

5. A vehicle electrical system according to any one of the preceding claims, **characterised in that** the storage unit (34, 34') is configured as a capacitor, more especially as a super capacitor.

6. A vehicle electrical system according to any one of the preceding claims, **characterised in that** the second, non-voltage-sensitive electric consumer (44, 44') is connected to the first voltage supply unit (40, 40').

7. A vehicle electrical system according to any one of the preceding claims, **characterised in that** the vehicle (10, 10') has a second electric machine (64), which is configured to drive driven wheels (12, 12') of the vehicle (10, 10') alone or in combination with the internal combustion engine (16, 16'), wherein the second voltage supply unit is a voltage transformer (76), which is connected on the input side to a switching circuit (74) containing the second electric machine (64).

8. A vehicle electrical system according to any one of claims 1 to 6, **characterised in that** the second voltage supply unit (36) is a generator present in the vehicle.

9. A vehicle electrical system according to any one of the preceding claims, **characterised in that** the control unit (10, 10') is furthermore configured to evaluate a driver access signal, and to initially charge the storage unit (34, 34') when driver access is detected.

10. A method for stabilising a voltage applied to a first, voltage-sensitive electric consumer (42, 42') arranged in a vehicle electrical system (38, 38') of a vehicle (10, 10'), wherein the a vehicle electrical system (38, 38'), in addition to at least one first, voltage-sensitive electric consumer (42, 42'), furthermore has at least a second, non-voltage-sensitive electric consumer (44, 44'), and a first voltage supply unit (40, 40'), which provides a supply voltage (U2, U2'), wherein furthermore provided are a storage unit (34, 34'), which is configured to store electric energy, at least temporarily, a second voltage supply unit (36, 76) to provide a charge voltage (U1, U1'), a switching unit (46, 46') to which at least the first, voltage-sensitive electric consumer (42, 42'), the storage unit (34, 34'), the first voltage supply unit (40, 40') and the second voltage supply unit (36, 76) are connected, and a control unit (30, 30'), **characterised in that** the following steps run in the control unit (30, 30'):
- determining whether a stabilisation of the voltage applied to the first, voltage-sensitive electric consumer (42, 42') is to be carried out,
- activating the switching unit (46, 46') as long as a stabilisation is not to be carried out in such a way that the first, voltage-sensitive electric consumer (42, 42') is connected to the first voltage supply unit (40, 40'),
- activating the switching unit (46, 46') as soon as a stabilisation is to take place in such a way that the first, voltage-sensitive electric consumer (42, 42') is connected to a series connection formed from the storage unit (34, 34') and the first voltage supply unit (40, 40') in order to thus supply the first, voltage-sensitive electric consumer by a voltage provided by the series connection to compensate an existing reduction in the supply voltage (U2, U2'), and
- activating the second voltage supply unit (36, 76) of the second, non-voltage-sensitive electric consumer (44, 44') and the switching unit (46, 46') following a stabilisation that has been carried out, at least temporarily in each case, in such a way that the second voltage supply unit (36, 76) provides a charge voltage (U1, U1'), the value of which is greater than the supply voltage (U2, U2') provided by the first voltage supply unit (40, 40'), **in that** an electric current flows through the second, non-voltage-sensitive electric consumer (44, 44'), at least temporarily, and **in that** it is possible to charge the storage unit (34, 34') via a current path (62, 62') configured by the second voltage supply unit (36, 76) and the second, non-voltage-sensitive electric consumer (44, 44').

11. A computer program product with a data carrier with a program code, which is configured to carry out a method according to claim 10 when the program code runs in a device according to any one of claims 1 to 9.

## Revendications

1. Réseau de bord de véhicule qui (38, 38') comporte en plus au moins un premier consommateur électrique (42, 42') sensible à la tension, au moins un second consommateur électrique (44, 44') non sensible à la tension, ainsi qu'une première unité d'alimentation en tension (40, 40') fournissant une tension d'alimentation (U2, U2'),
et comportant en outre :
- une unité de stockage (34, 34') pour stocker au moins périodiquement de l'énergie électrique,
- une seconde unité d'alimentation en tension (36, 76) pour fournir une tension de charge (U1, U1'),
- une unité de commutation (46, 46') à laquelle sont raccordés le premier consommateur électrique (42, 42') sensible à la tension, l'unité de stockage (34, 34'), la première unité d'alimentation en tension (40, 40') et la seconde unité d'alimentation en tension (36, 76), et
- une unité de commande (30, 30'),
**caractérisée en ce que**
- pour stabiliser la tension appliquée au premier consommateur électrique (42, 42') sensible à la tension, l'unité de commande (30, 30') est réalisée pour constater s'il faut stabiliser la tension appliquée au premier consommateur électrique (42, 42') sensible à la tension,
- l'unité de commande (30, 30') étant en outre réalisée pour :
• commander l'unité de commutation (46, 46') pour que le premier consommateur électrique (42, 42') sensible à la tension, soit raccordé à la première unité d'alimentation en tension (40, 40') aussi longtemps qu'il ne faut pas stabiliser, et
• commander l'unité de commutation (46, 46') pour que le premier consommateur électrique (42, 42'), sensible à la tension, soit raccordé au montage en série, formé par l'unité de stockage (34, 34') et la première unité d'alimentation en tension (40, 40') pour ainsi appliquer au premier consommateur électrique, sensible à la tension, la tension fournie par le montage en série pour compenser la réduction présente de la tension d'alimentation (U2, U2') dès qu'il faut stabiliser,
- l'unité de commande (30, 30') étant en outre réalisée pour, après la stabilisation entreprise, commander la seconde unité d'alimentation en tension (36, 76), le second consommateur électrique (44, 44') non sensible à la tension, et l'unité de commutation (46, 46'), chaque fois au moins périodiquement, pour :
• fournir par la seconde unité d'alimentation en tension (36, 76) fournisse une tension de charge (U1, U1') dont l'amplitude est supérieure à la tension d'alimentation (U2, U2') fournie par la première unité d'alimentation en tension (40, 40'),
• faire passer dans le second consommateur électrique (44, 44') non sensible à la tension, au moins périodiquement un courant électrique, et
• permettre la charge de l'unité de stockage (34, 34') par un chemin électrique (62, 62') réalisé par la seconde unité d'alimentation en tension (36, 76) et le second consommateur électrique (44, 44'), non sensible à la tension.

2. Réseau de bord selon la revendication 1,
**caractérisé en ce que**
le véhicule (10, 10') comporte un moteur thermique (16, 16') et un premier moteur électrique (28, 28'),
- le premier moteur électrique (28, 28') étant réalisé pour entrainer au moins périodiquement le moteur thermique (16, 16'),
- l'unité de commande (30, 30') étant réalisée en outre pour déterminer, s'il faut stabiliser la tension appliquée au premier consommateur électrique (42,42') sensible à la tension, s'il faut redémarrer et/ou démarrer en plus le moteur thermique (16, 16') avec la première machine électrique (28, 28').

3. Réseau de bord selon la revendication 2,
**caractérisé en ce qu'**
on constate qu'il faut redémarrer le moteur thermique (16, 16') si dans un état de repos du véhicule, il y a un signal de démarrage,
- dans l'état de repos du véhicule, le véhicule (10, 10') étant immobile et le moteur thermique (16, 16') étant à l'arrêt ou son régime se situant entre le régime d'arrêt et la valeur nulle et /ou **en ce qu'**on détecte le démarrage complémentaire du moteur thermique (16, 16'), si le véhicule étant en mouvement, il y a une demande de couple moteur,
- dans l'état de mouvement, le véhicule (10, 10') circulant et le moteur thermique (16, 16') étant arrêté ou tournant à une vitesse de rotation comprise entre la vitesse de rotation pour l'arrêt et la valeur nulle.

4. Réseau de bord selon l'une des revendications précédentes,
**caractérisé en ce que**
l'unité de commutation (46, 46') a un premier élément de commutation (48, 48') et un second élément de commutation (50, 50').

5. Réseau de bord selon l'une des revendications précédentes,
**caractérisé en ce que**
l'unité de stockage (34, 34') est un condensateur, notamment un super condensateur.

6. Réseau de bord selon l'une des revendications précédentes,
**caractérisé en ce que**
le second consommateur électrique (44, 44'), non sensible à la tension, est relié à la première unité d'alimentation en tension (40, 40').

7. Réseau de bord selon l'une des revendications précédentes,
**caractérisé en ce que**
le véhicule (10, 10') a une seconde machine électrique (64) réalisée pour entraîner les roues motrices (12, 12') du véhicule (10, 10') seule ou en combinaison avec le moteur thermique (16, 16'),
et la seconde unité d'alimentation en tension est un convertisseur de tension (76) dont l'entrée est reliée au circuit (74) de la second machine électrique (64).

8. Réseau de bord selon l'une des revendications 1 à 6,
**caractérisé en ce que**
la seconde unité d'alimentation en tension (36) est un générateur équipant le véhicule.

9. Réseau de bord selon l'une quelconque des revendications précédentes,
**caractérisé en ce que**
l'unité de commande (10, 10') est en outre réalisée pour exploiter un signal d'accès du conducteur et charger initialement l'unité de stockage (34, 34') lorsque l'accès du conducteur est détecté.

10. Procédé de stabilisation de la tension appliquée à un premier consommateur électrique (42, 42'), sensible à la tension dans le réseau de bord (38, 38') d'un véhicule (10, 10'),
- le réseau de bord (38, 38') ayant en plus au moins un premier consommateur électrique (42, 42') sensible à la tension, au moins un second consommateur électrique (44, 44') non sensible à la tension, et la première unité d'alimentation en tension (40, 40') fournissant la tension d'alimentation (U2, U2'), et
- en outre il est prévu une unité de stockage (34, 34') pour stocker de l'énergie électrique au moins périodiquement, une seconde unité d'alimentation en tension (36, 76) pour fournir une tension de charge (U1, U1'), une unité de commutation (46, 46') à laquelle sont reliés au moins le premier consommateur électrique (42, 42') sensible à la tension, l'unité de mémoire (34, 34'), la première unité d'alimentation en tension (40, 40') et la seconde unité d'alimentation en tension (36, 76) ainsi qu'une unité de commande (30, 30'),
procédé **caractérisé en ce que**
l'unité de commande (30, 30') exécute les étapes consistant à :
- constater s'il faut stabiliser la tension appliquée au premier consommateur électrique (42, 42') sensible à la tension,
- commander l'unité de commutation (46, 46') aussi longtemps qu'il ne faut pas stabiliser pour relier le premier consommateur électrique (42, 42') sensible à la tension, à la première unité d'alimentation en tension (40, 40'),
- commander l'unité de commutation (46, 46') dès qu'il faut stabiliser pour relier le premier consommateur électrique (42, 42') sensible à la tension, au montage en série, formé par l'unité d'accumulation (34, 34') et la première unité d'alimentation en tension (40, 40') pour ainsi alimenter le premier consommateur électrique, sensible à la tension avec la tension fournie par le montage en série pour compenser la réduction présente de la tension d'alimentation (U2, U2'), et
- commander la seconde unité d'alimentation en tension (36, 76) du second consommateur électrique, non sensible à la tension (44, 44') et l'unité de commutation (46, 46') ensuite pour une stabilisation entreprise, chaque fois au moins périodiquement de façon que la seconde unité d'alimentation en tension (36, 76) fournisse une tension de charge (U1, U1') dont l'amplitude est supérieure à la tension d'alimentation (U2, U2') fournie par la première unité d'alimentation en tension (40, 40'), de façon que le second consommateur électrique (44, 44'), non sensible à la tension soit traversé au moins périodiquement par un courant électrique et permettre la charge de l'unité de stockage (34, 34') par un chemin de courant (62, 62') formé par la seconde unité d'alimentation en tension (36, 76) et le second consommateur électrique (44, 44'), non sensible à la tension.

11. Produit de programme d'ordinateur comportant un support de données avec un code programme réalisé de façon à exécuter le procédé selon la revendication 10, lorsque le code programme est exécuté dans un dispositif selon l'une des revendications 1 à 9.
